# EUROPEAN PATENT APPLICATION

(11) **EP 2 000 739 A2**
(43) Date of publication of application: **10.12.2008**
(21) Application number: 08157607.6
(22) Date of filing: 04.06.2008
(51) Int. Cl.: F21V 31/00, A01K 63/06, F21S 8/00, F21W 131/401, F21Y 101/02

(54) **Submergible lamp**

(30) Priority: 05.06.2007 CL 200701609
(71) Applicant: Bioled Ltda., Puerto Montt (CL)
(72) Inventor: Navarro Alvarez, Maria Cristina, Puerto Montt (CL)
(74) Representative: Hyden, Martin Douglas

(57) **Abstract**

A submergible lamp for use or application of the photoperiod in the processes of smolting, feeding and optimum handling of the reproductive process of the salmon species, that has an energy-saving circuiting system, a better intensity of brightness and a structural design with means to make its installation easier, CHARACTERIZED in that said lamp consists of a semi-spherical casing (1) made of black polypropylene, with top side exit for the power cable (2) covered by a threaded stuffing box (3) through which the three-phase cable emerges, with an inner lining; on the surface, transversal to said semi-spherical casing (1), it has a tunnel (4), which permits the affixing and installation of the lamp; likewise it is surrounded by a peripheral ring made of black polypropylene (6) with flat top side and base walls (7) both of which have equidistant orifices (8) which allow for joining and affixing by means of screw bolts (9), with the orifices (10) of the central piece with a cylindrical cross section (11) equipped on the inside with a peripheral body or projection (12) that serves as support for the upper edge of the exterior body or glass cupola (13a), with the upper zone of that peripheral body or projection (12); in turn, the peripheral projection (12) has a central grooving (14) where an elastomer "O" ring (15) is placed that prevents water from entering the lamp; also, said lamp has another interior body or LED holder (16) made of plastic, equipped with 1120 Green LEDs, said interior body is placed inside the exterior body of glass (13a).

## Description

### Background to the Invention

The Invention refers to a submergible lamp for its use or application in photoperiod in processes of smolting, feeding and optimum handling of the the reproductive process of salmon species, whose source of illumination are a group of green LED luminaries issuing light with an intensity of 500 to 550 nanometres, by means that allow for a lower consumption than the lamps currently in use and which not only represent economies in terms of costs, but also a favourable environmental impact in terms of a lower consumption of fuel or batteries, which might eventually represent a danger to the environment, becoming waste and by demanding a substantial infrastructure in their installation.

In order to achieve the optimum characteristics of this invention, a technical analysis of the aquaculture of the zone was carried out, revealing the lackings, needs and technological progress made in various aspects.

It is at this point in the narrative-which reflects our site inspection- where the inner world of salmons emerges as a substantial vertice; this because among the various forms of treatment and handling that they receive during their permanence in the seawater centres one of the most important (due to its impact on the natural life cycle) is that which allows the producers to control the biological clock that they possess as part of their genetic coding.

The specialists in the field have explained that fish live in a cyclic environment that comprises temperature, light, salinity, pH, O₂, pressure, etc. Their survival, reproduction and growth depends of the perception of these factors and their translation into biolectric and hormonal impulses. Their perception of stimuli such as photoperiod and temperature is governed by the nervous system, which then causes the production of hormones that fulfil specific functions within the organism. In this process, the structures involved, which make it possible to canvass the environment and transform the information are the eyes (salmon are always looking because they have no eyelids; they see very well at night and they can see colours at infrared and ultraviolet wavelengths), the pineal gland (rounded structure located on the upper surface of the thalamus_ between the brain's hemispheres; provides the salmon with information about the moments of the day and time of year), and the brain (diencephalic or "deep" photoreceptors of the brain, a level that is almost enigmatic). These are in charge of canvassing the environment and transforming the stimuli into electrochemical signals. The latter generate a specific physiological response in the individual, which can be summarized from the reproductive point of view as
a. Regulation of the start of puberty
b. Regulation of gonad intensification
c. Regulation of ovulation and sperm production

In trout and salmon, puberty consists of the maturing of the physiological mechanisms that allow the individual to mature sexually. In practical terms, puberty is the first recrudescence of the gonads and the start-up of the process of gametogenesis and the production of sexual hormones, which will culminate months later with sexual maturity. The advent of puberty will depend on the species, the genetics and will also be influenced by factors such as age and size. Pacific Salmon have a single cycle; puberty and intensification are a single event that coincides in all of them. On the other hand, Atlantic salmon, rainbow trout and brown trout have recurring cycles, that is, with a circannual gonadal recrudescence.

For this reason, the Artificial Photo-period becomes vitally important. This is a form of biological handling that modifies the physiology of plants and animals. Thus, this system makes it possible to obtain eggs from salmon outside their normal spawning period. Today, this system is being used in only 20% of salmon producing companies operating in Chile.

This method was originally developed and analyzed at the Institute of Aquiculture of the University of Stirling, Scotland by Professor Dr. Niall Bromage and his team, who advised one of the most serious studies about the subject developed in Chile at the University of Concepcion.

More specifically, this method consists of the application of artificial photo-periods to alter the reproductive physiology of male and female individuals of the Coho (Oncorhynchus kisutch) salmon, Atlantic (Salmo salar) salmon and Rainbow Trout (Oncorhynchus mykiss). The basic methodology involves the application of pulses of artificial light for specific periods at different times during the year, whether to bring forward or delay the foreseeable spawning period for the group. The most successful of all protocols studied consisted in the application of a pulse of continuous light 24 hours a day for a certain number of days and during a certain period of the year. Historically, the best results have been obtained with Coho, Atlantic salmon has been less successful and so far no optimum results have been obtained with trout.

The basis for the application of this system is the coming into effect of Resolution No. 1531 of the Office of the Undersecretary of Fishing on July 18, 2000; before this legal resolution, the national salmon industry used to import roe from the northern hemisphere during periods in which the country's breeders are not fertile (November-January). After this Resolution, a restriction originating by the introduction of new pathologies, it was tacitly forbidden to import eggs from the northern hemisphere.

The above has given rise to serious difficulties for the industry, because it is impossible to take full advantage of the existing infrastructure at the hatcheries and smolting and fattening centres throughout the year (the installed capacity for growth and fattening of the salmon can be comprehensively used only through a hatchling production program staggered throughout the year).

According to the specialists, in the case of trout, implementing this technology is relatively simple, as the breeders can be maintained in fresh water and control is relatively easy. Also, trout (the male in particular) tend to respond very positively. The percentage of males and females that respond positively to the treatment is over 85%, provided that the specimens are of a certain age (or weight) that exceeds a certain critical threshold.

In the case of Atlantic salmon, which must ideally be "silver" SW3 or SW4, the installation of the technology in cages out at sea represents quite a technological challenge. Having said that, this issue has been resolved, after solving several major logistics problems. The greatest difficulties reside in the supply of electric energy for the raft cages and the illumination system. For the electrical supply there are two possibilities (depending on convenience and comparative cost): a portable generator, or a special underwater electrical cable.

There is today a large variety of photo-period illumination equipment, in attractive forms and presentations. But when you seek to achieve a higher performance in terms of lumens per watt, or an adecuate colour temperature, many of the systems currently in use score less in terms of the users' preferences.

For the most part, southern Chile's salmon fisheries use 400w lamps, but this situation seems to be changing with the introduction of raft-cages with a greater biomass capacity in the water that requires a greater luminous capacity. Thus the demand for 1,000w has been increasing. The above notwithstanding, Chilean industry still lags far behind in this aspect compared with Norway, for example, whose luminous capacity per raft-cage averages 8,000w. The experts in the field claim that this is due to the fact that salmon fisheries in Chile have not had a very good experience with this system in sea water (irregular growth and acceleration of maturity in some cases).

In practical terms and from a mechanical perspective, many of the lamps lose in efficiency, specifically the watertightness of the system, a fundamental and critical aspect at the time of deciding between one and another variety of lamp. There are other factors to consider, which are also important within the broader subject of the watertightness of the system, such as for example: external or internal reactance. Many lamps in the market today have the ignition system inside, which on the one hand simplifies exterior installation, translating into lower installation costs in the aisles, but leaves the lamp vulnerable to total destruction as in the event of a breach of the system's watertightness or breaking of the glass "the entire assembly is rendered useless."

Although it is true that a photoperiod system is in itself quite simple from an electrical point of view, there are important factors to consider before investing in one. An efficient design, suited to the characteristics of the fishery, can save us a lot of trouble in the future. Many of the companies that supply these systems know little about them and act merely as importers, using technicians who have a limited knowledge so that the result is an installed system that is deficient and fails to meet any standards.

The last and major factor to consider is that which specifically deals with the properties of the illumination system, which is what in the end, affects our fishes' growth period. The properties of light are its wavelength, energy and intensity.

In vacuum conditions, light travels at a speed of 300,000 kilometres per second. In the atmosphere this speed drops a bit. However, because water is a medium 1,000 times denser than air, in the watery medium, the speed of light drops to 200,000 Km/sec. The visible light that we receive from the sun ranges from red (700nm) to violet (400nm). The above notwithstanding, in the marine environment, the shorter and longer waves are attenuated very quickly as the water is very opaque to ultraviolet and particularly red light but transparent to blue and green light. Because of this, as depth increases light becomes monochrome.

From this fact it is possible to reach two relevant conclusions that underpin the concept of the lamp that is the object of this invention. One, and perhaps the one that can be demonstrated with greater precision is the saving of energy, given that it is a lamp that uses only ten per cent of the energy consumed by the traditional lamps, and also the favourable environmental impact, in terms of the drop in fuel or battery consumption which may become a environmental hazard upon becoming waste.

The main competitive advantage of these lamps in relation to the lamps currently in the market is that they use green LED (520nm). This combination of necessity and technology in part generates an important innovation.

Wikipedia defines LED in terms of the English acronym Light Emitting Diode; this is a semiconductor device that emits polychrome light, that is, light of different wavelengths when polarized in direct current and electricity runs through it, its colour depends on the semiconductor material used in the construction of the diode, and may range from ultraviolet through the complete spectrum of visible light up to infrared.

The semiconductor device is commonly encapsulated in a plastic cover with a higher resistance than those of glass normally used in incandescent lamps.

The first diodes built were the infrared and red coloured diodes, with the subsequent technological development allowing for the construction of diodes of increasingly shorter wavelengths. Blue diodes in particular were developed in the late 90s by Shuji Nakamura, and were added to the red and green diodes developed earlier, all of which permitted the obtaining of white light through the combination of the same. In a press release published in Helsinky, we find that on June 15, 2006, Shuji Nakamura was awarded the Millennium Technology Award 2006 for his development of new and revolutionary luminous sources, the blue, green and white luminous diodes (LED) and blue laser light. This technology is currently applied in various applications that improve the quality of human life. Profesor Shuji Nakamura's invention has generated a completely new sector in the investigation and development of semiconductors capable of generating light, paving the way for the large scale industrial production of efficient and low consumption luminous diodes, and creating the conditions for applications that improve living standards for human beings. Luminous diodes have very long useful lives and consume much less energy than normal incandescent lamps. In industrialized countries, the opportunities to save energy through the use of luminous diodes are extraordinary: it has been calculated that only in the United States, the replacement of existing illumination systems for new LED based systems could significantly reduce the consumption of energy over the next decades. The new luminous sources are also very adequate for operation with solar energy systems and therefore ideal for peripheral areas of developing countries.

The LED are used profusely in all kinds of status indicators (on/off), in signalling devices (traffic, emergency, etc.) and in information panels (the largest in the world, belonging to NASDAQ is 36.6 meters high and is in Times Square, Manhattan). They are also used to light up liquid crystal screens in mobile phones, calculators, electronic diaries, etc., as well as on bicycles and other similar uses. There are, also, LED printers.

The increased use of LED lamps in the field of illumination (including traffic signalling) is foreseeable in the future because, even though its uses are half-way between the incandescent lamp and the fluorescent lamp, it has clear advantages, particularly its long useful life, its robustness and lower energy dissipation. Also, for the same luminosity, they produce coloured light whereas the lamps used to date have a filter, which causes a significant diminution in their performance.

In support of this project, an intensive bibliographic review on the endocrine system of salmon species was carried out in order to determine what colour or range of colours are responsible for triggering the biological processes that intervene in the smolting process, the growth and the handling of the reproduction process.

As a result of the same, the main conclusions, according to the research carried out by Axelrod and Col. in 1974 and by Brand in 2004, are that the light has an incidence on the retina and the pineal window of fish. The luminous stimulus is transformed into a nervous stimulus, acting on the pineal gland. At the same time, the pineal gland stimulates or inhibits the secretion of melatonin, the hormone that gives the fish the exact representation between day and night.

This information is complemented by the research carried out by Porter and Col of 1999 to 2001, which determined that the minimum sensitivity of the fish's eye is 10⁻⁴ Lux and that of Ali and Col in 1961, which demonstrate that the eye registers a wavelength of between 360 and 690 nm, with optimum sensitivity at around 500nm wavelength, which is the green luminous spectrum.

With respect to the pineal window, according to Brand and Col (2004), it registers light but is incapable of creating images, has a sensitivity of 10⁻⁵ Lux and registers a wavelength of between 510-540nm (green).

We were thus able to determine that the best colour to stimulate salmon species is green, and considering that the characteristic of LED technology is to generate light of a specific wavelength, we developed a lamp application for use in salmon fisheries that emits a green light in the range of 510 to 540 nanometres.

In order to create this invention, we have carried out a detailed analysis of these studies and incorporated all the advantages of consumption and illumination using LED based systems to the world of salmon fisheries in order to achieve an optimum result.

The following is a schematic table indicating the main manufacturers of submarine lamps used by salmon fisheries.

| Company name | | Product description / service |
|---|---|---|
| Lamp of this Invention | **(Bioled)** | Submergible lights for photoperiod with green LED (80 and 30 watt consumption) |
| | **Aquastar** | Submergible lights with two metal haloid, 400 watts each (800 watts in total) |
| | **Nortec** | Submergible haloid lights imported from Norway of the Idema Agua brand. Consumption ranging from 400 to 1000 watts. |
| | **Nortec led** | Submergible LED lights imported from Norway, Idema Agua brand. Consumption per hour of 100 watts. |
| | **Luxmeter** | Single floating system, with 6 metallic haloid lamps, 400w each (2400 watts total) |
| | **Vollkomenn** | Submergible lights with metal haloid lamps, better quality of materials than Aquastar, but more expensive. Consumption ranging between 250 and 400 watts. |
| | **IEngel Chile** | Submergible lights with metal haloid bulbs of similar characteristics to those available in the market. |

The current supply of lamp systems for photoperiod applications possesses a broad range of lighting power, all of them activated by metal haloid lamps; the main difference between them is that the exterior model varies from one to the other.

This type of illumination systems has offered good results in its use in aquaculture; however, they have the following disadvantages:
a. Very high consumption of electricity. On average they require 4500 watts per hour per fattening cage.
b. Major infrastructure investments in order to implement the illumination systems: the fisheries are normally isolated from urban centres, and therefore require installing powerful generators, usually petroleum powered; this involves the added difficulty of transporting the fuel and major investments in cabling and rigging for each centre.
c. They generate heat: this causes constant breakdowns in the equipment derived from broken glass as a result of the thermal shock they are subjected to by working in cold waters.
d. Wastage of a good part of the energy generated: a metallic haloid generates white light throughout the spectrum of wavelengths; however, those that manage to penetrate the first layers of water are the blue and green wavelengths, the rest is lost.
e. High maintenance costs.
f. Risk of electric shock.

### Objective of the Invention

Our objective is to provide cost effective technical solutions to the salmon fisheries sector incorporating technological development and innovation into the aquaculture market.

In this context, we developed a submergible illumination lamp for photoperiod applications in the processes of smolting, fattening and handling of breeders. The system generates comparative advantages for the clients derived from an efficient use of energy and the correct stimulation of the biological processes of the fish.

In order to better understand the essential characteristics of the submergible lamp for photoperiod applications of the invention, it will be described according to the figures that form part and parcel of the invention, where:
Fig. 1, shows a perspective view of each individual part that makes up the submergible piece of the invention.
Figures 2 and 3 show a longitudinal sectional views of part of Figure 1, where it is possible to appreciate the inner rim, the "o" ring of watertightness.
Figures 4 and 5 show overhead views of the parts shown in Figures 2 and 3.

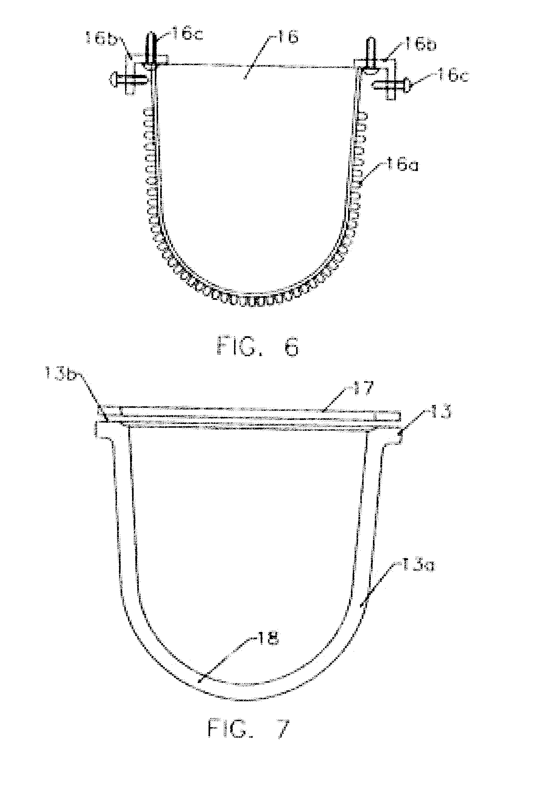

Figures 6 and 7 shows longitudinal sectional views of the LED holder ad cupola.

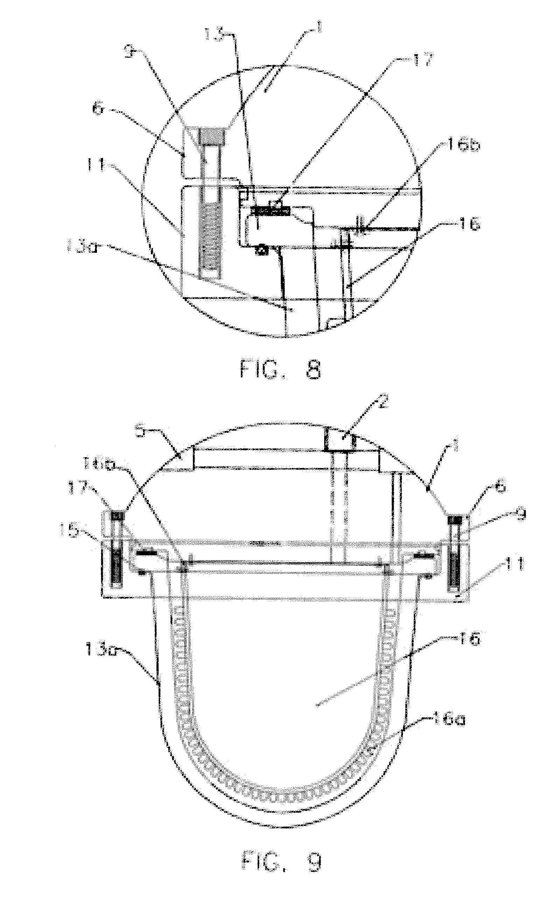

Figure 8 shows detail of the connection of the casing to the cupola.
Figure 9 shows a view of the assembled submergible lamp.
Figure 10 provides a cluster view of four LEDs in series, with a 12VDC feed.
Figure 11 shows a diagram of parallel connections for group clusters.

### Description of the Invention

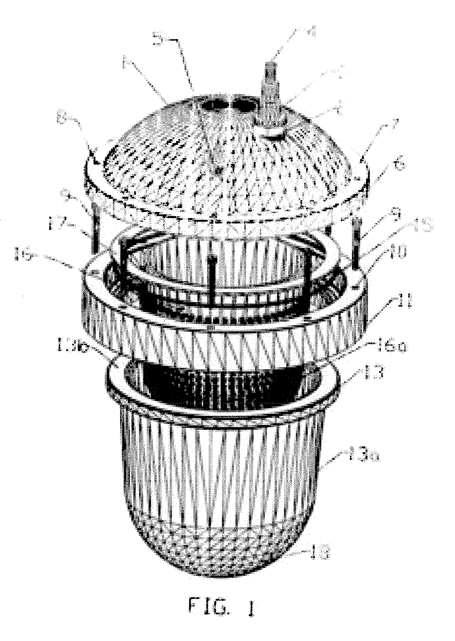

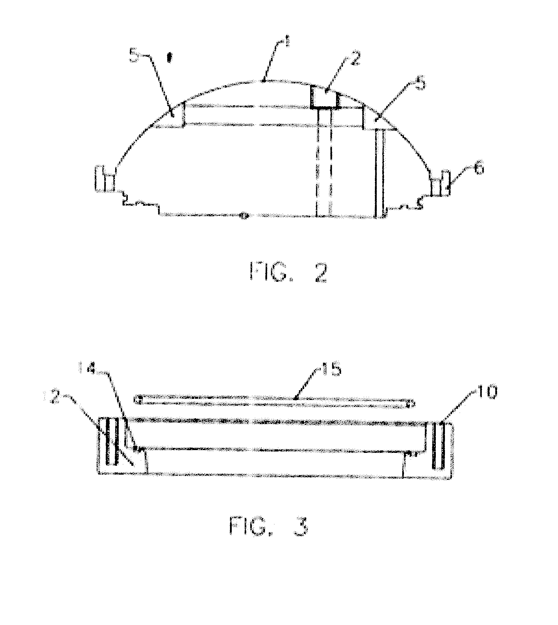

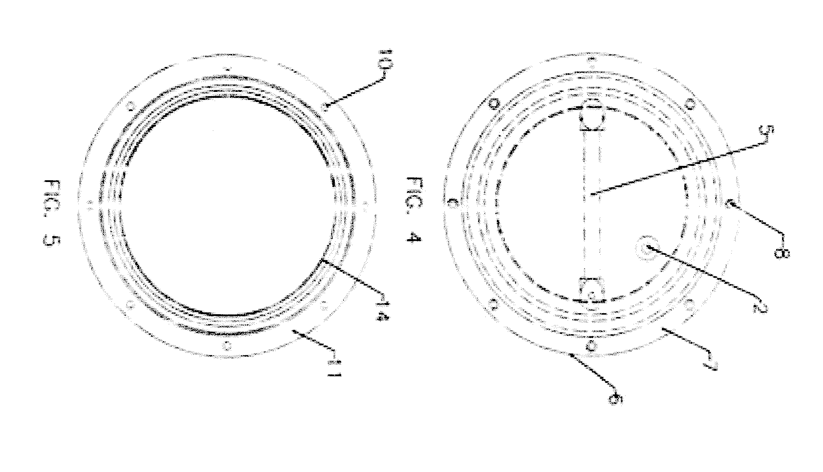

As shown in figures 1 to 5, the submergible lamp of the invention consists of a semi-spherical casing (1) made of black polypropylene, with top side exit for the power cable (2) covered by a threaded stuffing-box (3) through which the IP 68 three-phase cable emerges, with an inner lining. On the surface and on both sides it has a tunnel (4) through which the lamp is affixed.

Likewise, the said semi-spherical casing (1) is surrounded by a peripheral ring made of black polypropylene (6) with flat top side and base walls (7) both of which have equidistant orifices (8) which allow for joining and affixing by means of nuts and bolts (9) using the orifices (10) of the central piece with a cylindrical cross section (11) equipped on the inside with a peripheral rim (12) that serves as support for the upper edge of the glass cupola (13), with the upper zone of that rim (12). In turn, the rim has a central grooving (14) where an elastomer "O" ring (15) that prevents water from entering the lamp, inside of which there is another cupola or LED holder (16) of a smaller diameter than the previous one, made of a white plastic material, equipped with 1120 Green LEDs placed uniformly between one and the other. Inside it holds the circuits welded in 280 clusters of four LED each. The union and affixing through nuts and bolts (9) of the semi-spherical casing (1), with the central piece with a cylindrical cross section (11) permit holding and fixing the glass cupola (13) and the inner LED holding cupola (16) with the circuit system comprising the lamp of the invention.

The glass cupola 13 is sufficiently thick to withstand battering and the pressure of the water, manufactured with a material made of boron silicate, with a flat and bevelled rim, its body having a cylindrical cross section slightly cone-shaped (17) and semi-spherical (18) on one of its ends. It insulates the lamp and the electric circuit from the environment. It diffuses the light generated by the lamp, reducing optical loss to a minimum.

Also, the invention includes a regulated feed source (19) switching with 40 watt continuous current, and an integrated system of uninterrupted supply (20).

12 volt DC feed towards the LED lamp.

The cupola or LED housing (16) holds the circuitry and LED diode interconnections. It is made of reinforced plastic and has a cylindrical cross section that is slightly cone-shaped (21) with semi-spherical ends (22).

The LED arrangement forms a combination of serial and parallel connections to configure the lamp as a whole.

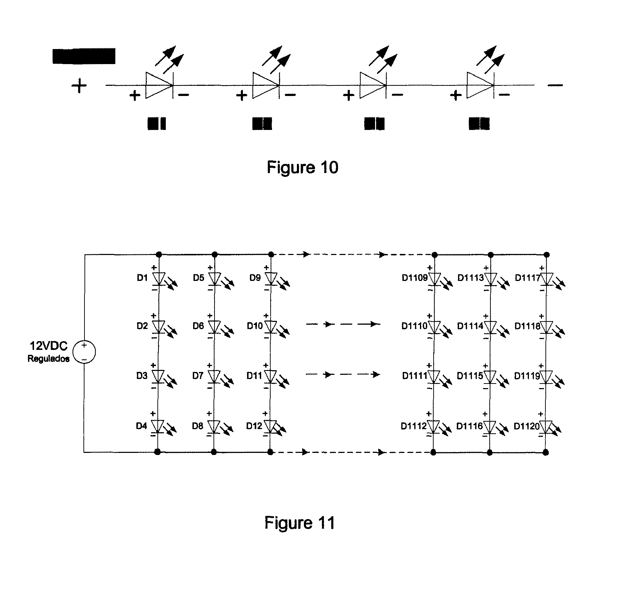

To obtain the intensity of shine needed for the lamp, 280 parallel clusters are grouped together (see Figure 11), obtaining as a result an installation of 1120 LEDs.

This form of interconnection of LED diodes saves up to 40% of energy with respect to conventional circuits, because:
a. It takes advantage of its drop in operating tension, limiting among each other the current that runs through them.
b. It dispenses with the consumption of energy of the resistance used by a conventional circuit.

## Claims

1. A submergible lamp for use or application of the photoperiod in the processes of smolting, feeding and optimum handling of the reproductive process of the salmon species, that has an energy-saving circuiting system, a better intensity of brightness and a structural design with means to make its installation easier, **CHARACTERIZED in that** said lamp consists of a semi-spherical casing (1) made of black polypropylene, with top side exit for the power cable (2) covered by a threaded stuffing box (3) through which the three-phase cable emerges, with an inner lining; on the surface, transversal to said semi-spherical casing (1), it has a tunnel (4), which permits the affixing and installation of the lamp; likewise it is surrounded by a peripheral ring made of black polypropylene (6) with flat top side and base walls (7) both of which have equidistant orifices (8) which allow for joining and affixing by means of screw bolts (9), with the orifices (10) of the central piece with a cylindrical cross section (11) equipped on the inside with a peripheral body or projection (12) that serves as support for the upper edge of the exterior body or glass cupola (13a), with the upper zone of that peripheral body or projection (12); in turn, the peripheral projection (12) has a central grooving (14) where an elastomer "O" ring (15) is placed that prevents water from entering the lamp; also, said lamp has another interior body or LED holder (16) made of plastic, equipped with 1120 Green LEDs, said interior body is placed inside the exterior body of glass (13a).

2. A submergible lamp, for the use or application of photoperiod in the smolting processes, according to claim 1, **CHARACTERIZED in that** the interior body or LED holder (16) has a circuiting system inside it (16d) welded in 280 clusters of four LED each.

3. A submergible lamp, for the use or application of photoperiod in the smolting processes, according to claims 1 and 2, **CHARACTERIZED in that** the exterior body or glass cupola (13a) is sufficiently thick to withstand battering and the pressure of the water, manufactured with material of boron silicate with a flat and polished peripheral rim (13), its body having a cylindrical cross section slightly cone-shaped and semi-spherical (18).

4. A submergible lamp, for the use or application of photoperiod in the smolting processes, according to claim 1, **CHARACTERIZED in that** said lamp has a regulated switching feed source with 40 watt continuous current, and an integrated system of uninterrupted supply and 12 volt DC feed towards the LED lamp.

5. A submergible lamp, for the use or application of photoperiod in the smolting processes, according to claim 1, **CHARACTERIZED in that** the interior body or cupola or LED holder (16) is made of reinforced plastic and has a cylindrical cross section that is slightly cone-shaped (21) with semi-spherical ends (22).

6. A submergible lamp, for the use or application of photoperiod in the smolting processes, according to claim 1, **CHARACTERIZED in that** the lamp has an elastomeric band (17) that is installed on the upper rim (13) of the exterior body of glass (13a) and can be used as a cushioning and waterproofing means with the central body (11).
